# EUROPEAN PATENT APPLICATION

(11) **EP 3 664 366 A1**
(43) Date of publication of application: **10.06.2020**
(21) Application number: 18841887.5
(22) Date of filing: 30.07.2018
(51) Int. Cl.: H04L 9/32, G06F 21/44

(54) **AUTHENTICATION SYSTEM, ELECTRONIC APPARATUS USED IN AUTHENTICATION SYSTEM, AND AUTHENTICATION METHOD**

(30) Priority: 04.08.2017 JP 2017151287
(71) Applicant: Nidec Corporation, Kyoto-shi, Kyoto 601-8205 (JP)
(72) Inventor: KAWAKAMI Hiroyuki, Kyoto-shi Kyoto 601-8205 (JP)
(74) Representative: Stöckeler, Ferdinand
(86) International application number: PCT/JP2018/028421
(87) International publication number: WO 2019/026833

(57) **Abstract**

An authentication system performs authentication using a challenge-response scheme. A first device, when receiving an authentication request from a second device, sends challenge data. The second device performs function computation using the challenge data and key information possessed by itself to generate data having a data length Ha longer than a payload length L. The second device generates response data having a data length Hb shorter than or equal to the payload length L using a predetermined conversion rule, and sends the response data to the first device. The first device performs function computation using the challenge data and key information possessed by itself to generate data having the data length Ha. The first device generates data D1 having the data length Hb from the data having the data length Ha using the conversion rule. The first device checks the response data with the data D1 to perform authentication.

## Description

### TECHNICAL FIELD

The present disclosure relates to authentication systems, electronic devices for use in the authentication system, and authentication methods.

### BACKGROUND ART

Challenge-response authentication is a way of authentication performed between an authenticating electronic device and an electronic device to be authenticated. The authenticating electronic device (authentication server), when receiving an authentication request from the electronic device to be authenticated (client device), sends a challenge code to the client device. The client device calculates a hash value using the challenge code and a character string (e.g., a password) for authentication, puts the calculated hash value directly into the data payload of a packet, and sends the packet to the authentication server.

The authentication server calculates another hash value using the client device's password previously stored in itself and the challenge code. The authentication server checks the hash value calculated by itself with the hash value received from the client device. If the result of the checking indicates that the two hash values perfectly match, the authentication of the client device is successful. Otherwise, the authentication of the client device is unsuccessful.

For example, Japanese Laid-Open Patent Publication No. 2006-191537 discloses a technique of performing authentication using a hash function, such as SHA-256, in the case where IPsec, which is a secure Internet protocol, is used. Japanese Laid-Open Patent Publication No. 2009-187547 discloses a technique in which a secure storage area is provided in the user data storage area of a data storage device, and authentication employing a hash function is required in an operation of reading data stored in a sub-storage area in the user data storage area. Japanese Laid-Open Patent Publication No. 2003-318894 discloses a technique of preventing impersonation by performing authentication which does not employ a hash function. Specifically, an authenticating server sends 64-bit challenge data to a terminal to be authenticated. The terminal sends data of the 56 most significant bits of the challenge data obtained by removing the 8 least significant bits, as response data, to the server. Only a terminal that previously has a rule for extracting a portion of challenge data can be authenticated as an authorized terminal, resulting in prevention of impersonation.

### CITATION LIST

### PATENT LITERATURE

Patent Document No. 1: Japanese Laid-Open Patent Publication No. 2006-19.1537
Patent Document No. 2: Japanese Laid-Open Patent Publication No. 2009-187547
Patent Document No. 3: Japanese Laid-Open Patent Publication No. 2003-318894

### SUMMARY OF INVENTION

### TECHNICAL PROBLEM

In a typical computer system in which a plurality of computers are connected together through a high-speed communication line, a challenge code (e.g., a calculated hash value) having a relatively large data size is sent and received directly for authentication in order to maintain high security. For example, in the case of the hash function SHA-256, a 256-bit hash value is sent and received as a challenge code. The challenge code is contained directly in one packet or one data frame, which is sent and received through a high-speed communication line.

Meanwhile, there may be some communication lines having lower transmission performance, which is determined according to bandwidth, transmission rate, packet size, etc., used in communication, than that of a communication line in a typical computer system. Such a communication line having lower transmission performance is, for example, one that is used in cars, etc. In some cases, such a system may require authentication.

There is a demand for an authentication technique capable of being used even in the case of a communication line having relatively lower transmission performance than that of a typical computer system.

### SOLUTION TO PROBLEM

In an illustrative embodiment, an authentication system according to the present disclosure is an authentication system which has a first and a second device and in which the first device performs authentication on the second device using a challenge-response scheme. The first device includes a first storage device that stores first key information for authentication, a first communication circuit that sends and receives communication data having a payload length L, and a first arithmetic circuit. The second device includes a second storage device that stores second key information, a second communication circuit that sends and receives communication data having the payload length L, and a second arithmetic circuit. The first and second storage devices further store a common function used in an authentication process. The second arithmetic circuit of the second device sends an authentication request to the first device. The first arithmetic circuit of the first device sends challenge data to the second device in response to the authentication request. The second arithmetic circuit performs computation using the function taking the challenge data and the second key information as input values to generate data having a data length Ha longer than the payload length L, generates response data having a data length Hb shorter than or equal to the payload length L from the data having the data length Ha using a predetermined conversion rule, and sends the response data to the first device. The first arithmetic circuit performs computation using the function taking the challenge data sent to the second device and the first key information as input values to generate data having the data length Ha, and generates data D1 having the data length Hb from the data having the data length Ha using the conversion rule. The first arithmetic circuit receives the response data from the second device, and checks the response data with the data D1 to perform authentication.

### ADVANTAGEOUS EFFECTS OF INVENTION

In the case where authentication is performed using a challenge-response scheme in an environment in which communication is performed using communication data having a payload length L, although data longer than the payload length is generated from challenge data and key information, the data is converted into response data having a data length which can be sent using the payload length L. This allows implementation of an authentication function without adapting a communication command frame to have a shorter payload length or joining a plurality of frames together.

### BRIEF DESCRIPTION OF DRAWINGS

FIG. **1** is a diagram showing an example of an authentication system according to an embodiment of the present disclosure in which challenge data and response data are sent and received.
FIG. **2** is a diagram showing a self-propelled robot and a PC in an embodiment of the present disclosure.
FIG. **3A** is a diagram showing, particularly, a hardware structure of a motor drive system of the self-propelled robot in an embodiment of the present disclosure.
FIG. **3B** is a diagram showing a hardware configuration of the PC in an embodiment of the present disclosure.
FIG. **4** is a diagram showing a cooperation control system in which a single carrier table is mounted on two motor drive systems and which carries a package in an embodiment of the present disclosure.
FIG. **5** is a diagram showing a configuration of a welding robot in an embodiment of the present disclosure.
FIG. **6** is a diagram showing a specific structure of a third joint drive system in an embodiment of the present disclosure.
FIG. **7** is a diagram of a data structure of a 32-byte hash value in an embodiment of the present disclosure.

### DESCRIPTION OF EMBODIMENTS

It is considered that in authentication which is performed using a hash function in a computer system, it is very important to avoid a "collision" in which different inputs are mapped to the same hash value. The purpose of this is to maintain high security. As a result, the data size of hash values may be large. For example, in the case where hashing is performed using the hash function SHA-256, the data size of hash values is 256 bits (32 bytes). The data size of hash values is fixed. A calculated hash value is sent directly to another terminal. When data of a hash value is sent and received, for example, in the case of Ethernet (registered trademark), a payload length of up to 1500 bytes is available in a frame, and therefore, the hash value data can be accommodated in a single data frame, which is sent and received.

Meanwhile, there are some communication standards in which a packet or data frame has a payload length which is much shorter than that of a frame in Ethernet (registered trademark). Among such communication standards is, for example, the communication standard for CAN communication for an in-vehicle network in an automobile. In the CAN standard, the payload length is 8 bytes. There is a communication specification in which the payload length is 13 bytes. Thus, there are multiple communication standards in which the payload length is 13 bytes or less.

In the case where a hash value is sent and received using a packet having a short payload length, a hash value data may be divided into pieces having a size corresponding to the payload length, and a plurality of packets may be generated. In that case, the number of times communication is performed, i.e., the number of times packet transmission is performed, increases. In addition, in order to allow an original hash value to be reassembled, it is necessary to describe, in the header of each divided hash value data piece, information indicating where the hash value data is divided to obtain that piece. A receiver device needs to put the hash value data pieces together to reassemble an original hash value.

In the above process, congestion is highly likely to occur, and communication overhead increases. Therefore, the above process produces a heavy load on a communication line having low transmission performance.

The present inventor has completed an authentication system suitable for authentication that is performed by one device with respect to another device even in a communication system in which a packet is sent and received according to a communication standard employing a payload length shorter than that of, for example, Ethernet (registered trademark) or the like.

Embodiments of an authentication system according to the present disclosure will now be described with reference to the accompanying drawings.

In the embodiments, a process will be described in which a motor module having a motor communicates with an external device (e.g., a PC) which controls the motor module, and performs authentication on the external device. If the authentication of the external device by the motor module is successful, the motor module is allowed to receive a control instruction from the external device, and operate the motor according to the control instruction.

It is considered that the necessity for a motor module to perform authentication on an external device will increase more and more in future. For example, in the case of an electric car having an automated-driving function, if no security measures are taken for a motor module, a malicious third party may be likely to hack the electric car and remotely take over operations of the electric car, such as starting and stopping traveling, and steering. To cause a motor module to perform authentication on an external device that sends a control instruction is effective in avoiding such takeover.

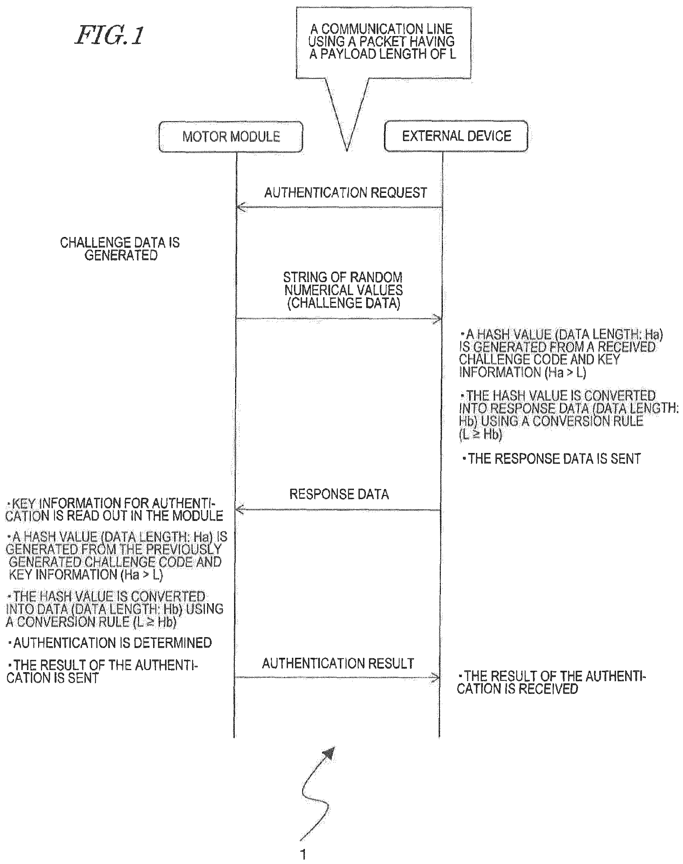

FIG. **1** shows an example authentication system **1** in which challenge data and response data are sent and received according to a challenge/response authentication scheme. In the authentication system **1,** it is assumed that communication is performed according to a packet exchange scheme, and the payload length of a packet is L.

In this example, the external device initially sends an authentication request to the motor module. The motor module, when receiving the authentication request, generates and sends a string of random numerical values (challenge data) back to the external device.

The external device calculates a hash of previously stored key information using the challenge data and a hash function. The hash value thus obtained has a data length of Ha which satisfies the relationship Ha > L. The external device converts the hash value of key information into response data using a previously prepared conversion rule. The response data has a data length of Hb which satisfies the relationship L ≥ Hb. That is, the response data is accommodated in the payload of a packet. The external device sends a packet containing the response data to the motor module.

The motor module receives the response data. The motor module calculates a hash of key information previously prepared in the motor module for authentication, using the previously generated challenge data and a hash function in the motor module. The motor module checks the hash value thus obtained with the hash value received from the external device, and performs authentication determination. The motor module sends the result of the authentication to the external device.

If the external device is an authorized device, the key information and conversion rule possessed by the external device are identical to the key information and conversion rule previously stored in a memory (not shown) of the motor module. Therefore, the authentication is successful. The motor module sends, to the external device, a command (ACK) indicating that the authentication is successful.

Meanwhile, if the external device is an unauthorized device, one or both of the key information and conversion rule are typically different. As a result, the authentication of the external device is unsuccessful. The motor module sends, to the external device, a command (NAK) indicating that the authentication is unsuccessful. Note that only when the authentication is successful, a command (ACK) may be sent to the external device.

As described above, in the authentication system **1,** the external device does not send a hash value directly as response data, and instead, converts a hash value into data having a smaller data size using a predetermined conversion rule, and sends the resultant data as response data. Examples of such a conversion rule include the process of extracting the P most significant bits of a hash value, the process of extracting the Q least significant bits of a hash value, or the process of extracting S bits of a hash value from the bit at position R to the bit at position R + (S - 1) (counting from the most significant bit). Note that the above P, Q, R, and S are a positive integer.

By the above process, a hash value is converted into data having a smaller data size, and therefore, accidental duplication of converted data is likely to occur. However, whether or not such accidental duplication occurs depends on the combination of key information, a hash function, and a conversion rule, and therefore, the possibility of the accidental duplication is considered to be sufficiently low. In other words, it is considered that a malicious third party can be sufficiently prevented from being erroneously authenticated. By the above process, the size of the converted data is such that the data can be communicated in a single packet, and therefore, the number of times a packet is sent can be advantageously reduced. The present inventor has considered that communication load can be reduced while allowable reliability is maintained, and has arrived at the above technique.

A specific example of the foregoing will be described. The hash function is SHA-256.

As the key information, a string of symbols previously set by a human can be used as a common key. Alternatively, as the key information, instead of a string of symbols set by a human, a parameter reflecting a physical individual difference possessed by each motor can be used. For example, a string of numerical values obtained by numerical conversion of a parameter which varies depending on manufacturing variations of a motor varies from motor to motor, and therefore, is information unique to each motor. Such a string of numerical values can also be called "motor fingerprint information," likening it to a fingerprint, which can be used to substantially uniquely identify a human.

The motor fingerprint information may, for example, be determined based on a signal which is output by a sensor when the rotor is rotating at a constant speed. More specifically, while the rotor is rotating at a constant speed, a rotated amount of the rotor (a moved amount of the mover), as split by a crossing at which any two signals among a plurality of signals that are output from a plurality of magnetic sensors cross each other, is measured. Thus, measurement data is acquired in which a rotated amount of the rotor corresponding to each segment is associated with every segment. Such measurement data can be used as "motor fingerprint information." Such measurement data may, for example, be a string of 72 numerical values. In the case where one segment is represented by 2 bytes, the motor fingerprint information of a 6-pole pair motor has a size of 72 bytes. Such a string of numerical values is obtained by sensors attached to a motor, and is unique to each individual motor.

The payload length L of a packet is 13 bytes or less. In the CAN standard, L is 8 bytes. The above P, Q, and S may be equal to L or may be shorter than L.

After authentication is performed on the external device, the external device may additionally perform authentication on the motor module, i.e., so-called mutual authentication may be performed. This is because in order to avoid unauthorized remote operation, it is secure to establish mutual authentication such that both the motor module and the external device are a proper device.

A procedure for mutual authentication is started when an external device which has been authenticated by a motor module sends, to the motor module, challenge data for authentication of the motor module. The sent motor module authentication challenge data may be a string of random numerical values generated by the external device, or may be challenge data which has been sent by the motor module in the previous authentication procedure, for simplification of a process. A procedure for subsequent authentication of the motor module is similar to the above-described authentication procedure for the external device. If in the above description of the authentication procedure for the external device, the "motor module" and the "external device," which are an operation entity, are replaced by each other, authentication of the motor module will be understood.

Note that in the case where mutual authentication is performed, the step in which a motor module to be authenticated sends an authentication request to an external device can be removed. This is because the authentication of the external device has been completed, and therefore, it is considered that the procedure for mutual authentication has already been started. Note that the motor module may send an authentication request to the external device.

By performing mutual authentication, more reliable communication is achieved between a first device and a second device. Even if a device on which authentication is first performed is a malicious or less reliable device which permits authentication under any conditions, mutual authentication allows the use of a device with reliability maintained.

Because the payload length L of a packet is 13 bytes or 8 bytes, a 32-byte hash value is converted into 13-byte or 8-byte data. The converted data may take 2^{(8∗8)} values or 2^{(8∗13)} values. Either value is sufficiently large, and therefore, there is substantially no chance of a malicious third party sending accidentally matching data as response data.

Another attack conceived by a malicious third party is an exhaustive attack (brute-force attack). However, it takes time to find matching data by an exhaustive attack. Furthermore, it is relatively easy to take measures against an exhaustive attack. To do so, when the authentication process has failed a predetermined number of successive times, a limitation may be put so that an authentication request is thereafter rejected for at least a predetermined period of time. Specifically, in the case of the motor module of FIG. **1****,** when the authentication process has failed three successive times, an authentication request from the external device is thereafter rejected for at least 10 minutes. In some applications requiring higher reliability, the motor module may reject all subsequent authentication requests.

As described above, even in the case where a hash value is converted into data having a smaller size, sufficiently high security can be maintained.

A first embodiment of the authentication system **1** according to the present disclosure will now be described.

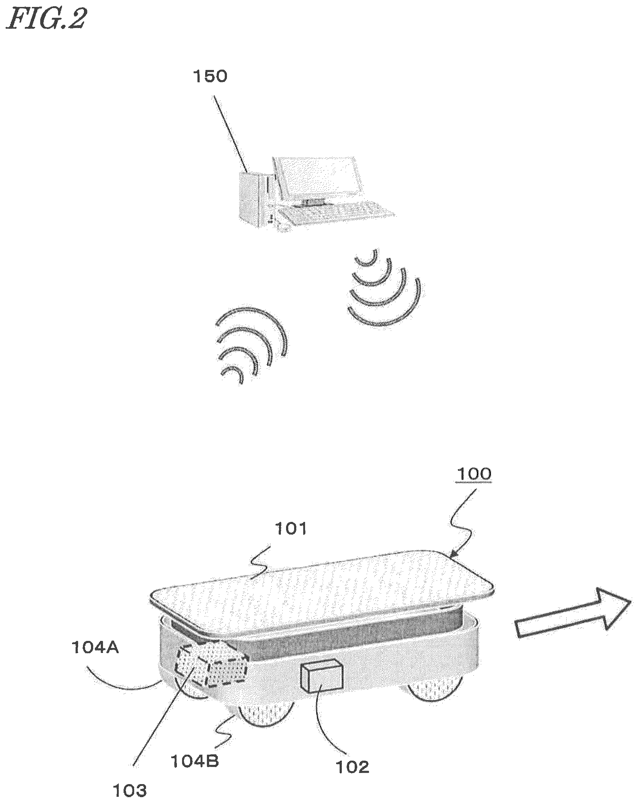

FIG. **2** shows a self-propelled robot **100** and a PC **150.** The PC **150,** which is equivalent to the above external device, controls an operation of the self-propelled robot **100** through a wireless communication line.

The self-propelled robot **100** has a carrier table **101,** a system controller **102,** a motor drive system **103,** a left drive wheel **104A,** and a right drive wheel **104B.** The carrier table **101** is for placing an object to be carried thereon. The system controller **102** is a signal processor (CPU) which controls the entirety of the self-propelled robot 100. The system controller **102** performs, for example, an initialization process on the self-propelled robot **100** when the self-propelled robot **100** is turned on.

The motor drive system **103** includes two motor modules which drive the left drive wheel **104A** and the right drive wheel **104B,** respectively. In this embodiment, each motor module of the motor drive system **103** includes a communication circuit (described below) which can independently communicates with the PC **150.** Note that in this embodiment, at least one communication circuit is provided. The communication circuit can distribute communication with the PC **150** to each motor module.

When the initialization process has been completed by the controller **102** after the self-propelled robot **100** is turned on, each motor module in the motor drive system **103** communicates with the PC **150,** and independently performs the authentication process of FIG. **1****.** The PC **150,** which is supposed to control the self-propelled robot **100,** previously stores motor fingerprint information possessed by each motor module of the self-propelled robot **100.** In each motor module, if authentication of the PC **150** is successful, the self-propelled robot **100** permits reception of a control instruction from the PC **150.** The self-propelled robot **100** travels in a direction indicated by an arrow in FIG. **2****,** which is assumed to be a forward direction, according to a control instruction from the PC **150.**

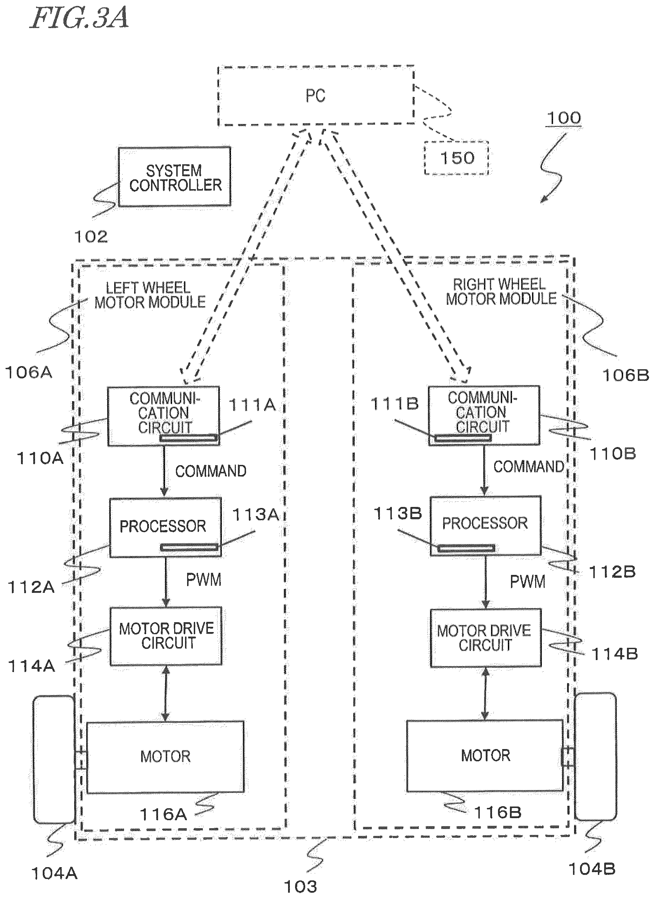

FIG. **3A** shows, particularly, a hardware structure of the motor drive system **103** of the self-propelled robot **100.** For reference, the PC **150,** which is not included in the self-propelled robot **100,** is indicated by a dashed line.

The motor drive system **103** has a left wheel motor module **106A** and a right wheel motor module **106B.** The left wheel motor module **106A** has a communication circuit **110A,** a processor **112A,** a motor drive circuit **114A,** and a motor **116A.** The right wheel motor module **106B** has a communication circuit **110B,** a processor **112B,** a motor drive circuit **114B,** and a motor **116B.** In the description that follows, the left wheel motor module **106A** and the right wheel motor module **106B** are also collectively referred to as "motor modules **106A** and **106B."** The motor modules **106A** and **106B** are each also called an "intelligent motor (registered trademark)."

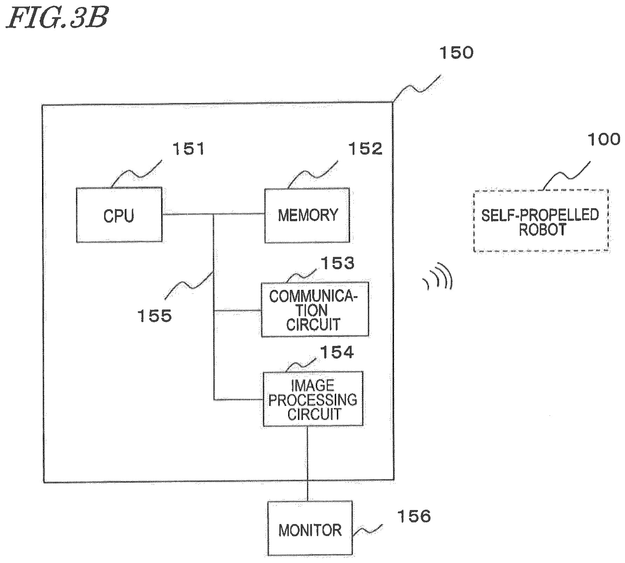

FIG. **3B** shows a hardware configuration of the PC **150.** The PC **150** has a CPU **151,** a memory **152,** a communication circuit **153,** and an image processing circuit **154.** The CPU **151,** the memory **152,** the communication circuit **153,** and the image processing circuit **154** are coupled together through a communication bus **155** so that data can be exchanged between each device.

The CPU **151** is a "signal processing circuit" or "control circuit" (computer) that controls an operation of the PC **150.** The CPU **151** is typically a semiconductor integrated circuit.

The memory **152** is a volatile storage device that stores a computer program executed by the CPU **151.** The memory **152** may also be used as a work memory when the CPU **151** performs computation.

The communication circuit **153** can perform wireless communication according to, for example, the Wi-Fi (registered trademark) standard, to exchange data with the self-propelled robot **100.** In authentication, the communication circuit **153** sends challenge data received from each motor module of the self-propelled robot **100** to the CPU **151** and/or the memory **152** through the bus **155.** The communication circuit **153** also receives response data to be sent to each motor module of the self-propelled robot **100,** from the CPU **151** through the bus **155.**

The image processing circuit **154** generates video data to be displayed on an external monitor **156.** The image process circuit **154** operates only when an administrator controls the self-propelled robot **100,** and displays video on the external monitor **156.** In this embodiment, the image process circuit **154** will not be described in greater detail. Note that the monitor **156** may be integrated with the PC **150.** The process of the image processing circuit **154** may be executed by the CPU **151.**

The authentication process will now be specifically described with reference to, particularly, FIG. **3A****.** Note that the motor modules **106A** and **106B** of FIG. **3A** perform similar processes, and therefore, the process of the left wheel motor module **106A** will be described as a representative example.

The communication circuit **110A** has a buffer **111A.** The buffer **111A** previously stores an identifier for identifying the left wheel motor module **106A.** The identifier may be a character(s) and/or a numeral(s) that are uniquely identifiable in a communication network within the communication coverage, and may be a non-duplicate identifier assigned to each device, for example. An example of the identifier is a MAC address or IP address. In the description that follows, the identifier is assumed to be a MAC address.

The CPU **151** of the PC **150** sends a data frame containing an authentication request to the left wheel motor module **106A.** In the data frame, for example, the MAC address of the left wheel motor module **106A** is specified as an address.

The communication circuit **110A** of the left wheel motor module **106A,** when receiving the data frame, performs the processes of the physical layer and data link layer respectively to determine whether or not the address of the data frame matches the MAC address stored in the buffer **111A.** If the addresses match, the communication circuit **110A** continues to process the data frame. Otherwise, the data frame is discarded.

If the communication circuit **110A** continues to process the data frame, the communication circuit **110A** further successively performs the processes of the IP layer, transport layer, etc., in the OSI reference model, on the data frame, and sends the resultant data to the processor **112A.**

The processor **112A** is a semiconductor-integrated signal processing processor. The processor is also called a "signal processing circuit" or "control circuit." The processor **112A** has a register **113A** that stores data used in a computation process.

The processor **112A** determines that the data received from the communication circuit **110A** is an authentication request from the PC **150.** As a result, the processor **112A** of the left wheel motor module **106A** starts the authentication process of FIG. **1** together with the PC **150** through the communication circuit **110A.** If the authentication of the PC **150** is successful in the authentication process, the processor **112A** obtains a control instruction from the PC **150** using the same procedure as that used to obtain the authentication request.

Examples of the control instruction include a rotational direction instruction indicating the direction of rotation of a motor (a forward or backward direction), and a speed instruction indicating a rotational speed.

The processor **112A** reads data corresponding to the specified rotational direction and rotational speed from the register **113A,** and generates a signal for rotating the motor **116A** in the specified rotational direction at the specified rotational speed. The signal is, for example, a pulse width modulation (PWM) signal.

The motor drive circuit **114A,** which is, for example, an inverter circuit(s), each causes a current having a magnitude and direction corresponding to the PWM signal to flow in the motor **116A.** As a result, the motor **116A** is rotated in the specified rotational direction at the specified rotational speed.

The processor **112A** receives an information providing instruction from the PC **150.** The processor **112A,** when receiving the information providing instruction, sends the value of torque currently generated in the motor **116A** and location information to the PC **150.** The location information is obtained as, for example, information indicating a traveling distance which is obtained by multiplying the number of revolutions of the motor by the circumference of a wheel. The PC **150** can determine whether or not the self-propelled robot **100** is traveling along an intended path, using the obtained torque value and location information.

Next, a variation of the first embodiment will be described.

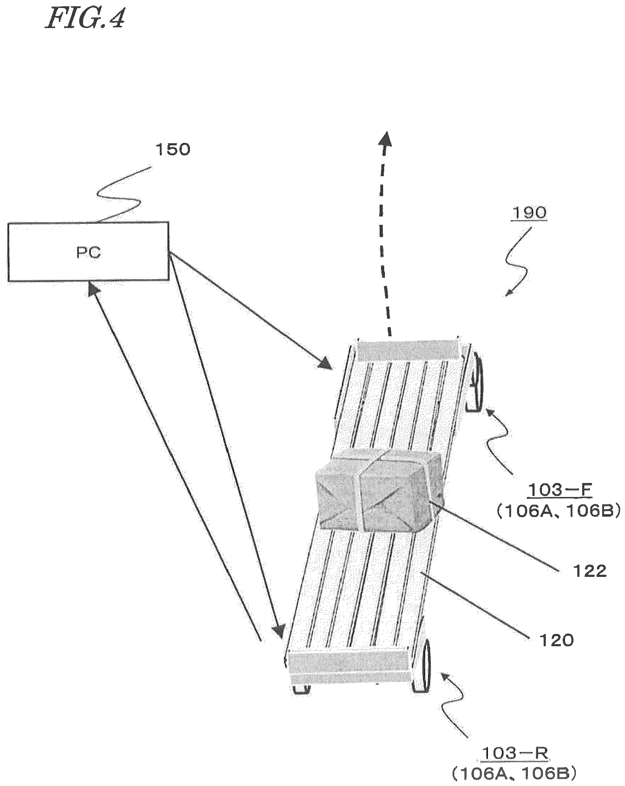

FIG. **4** shows a cooperation control system **190** in which a single carrier table **120** is mounted on two motor drive systems **103-F** and **103-R,** and which carries a package **122.** The motor drive systems **103-F** and **103-R** each have the configuration of FIG. **3A****.** Specifically, in the cooperation control system **190,** the package **122** is carried by four motors.

In each of the motor drive systems **103-F** and **103-R,** the left wheel motor module **106A** and the right wheel motor module **106B** independently perform authentication on the PC **150.** If the PC **150** is successfully authenticated by all the motor modules, the PC **150** is allowed to perform control.

In the example of FIG. **4****,** the PC **150** sends a rotational direction instruction and a speed instruction to each of the left wheel motor module **106A** and the right wheel motor module **106B** of each of the motor drive systems **103-F** and **103-R.** The PC **150** also sends an information providing instruction to the motor modules **106A** and **106B** of the rear motor drive system **103-R** to obtain a torque value and location information. The PC **150** causes the rear motor drive system **103-R** to exert a greater drive force than that of the front motor drive system **103-F** so that the carrier table **120** is pushed from the rear.

The present inventor sent an information providing instruction to the motor modules **106A** and **106B** of the rear motor drive system **103-R,** received a torque value and location information, and controlled the motor modules **106A** and **106B.** The present inventor verified that the package **122** can be stably carried. Note that when only a speed instruction was input to each of the motor modules of the motor drive systems **103-F** and **103-R** so that the package **122** is carried, the package **122** dropped from the carrier table **120.**

Next, a second embodiment will be described.

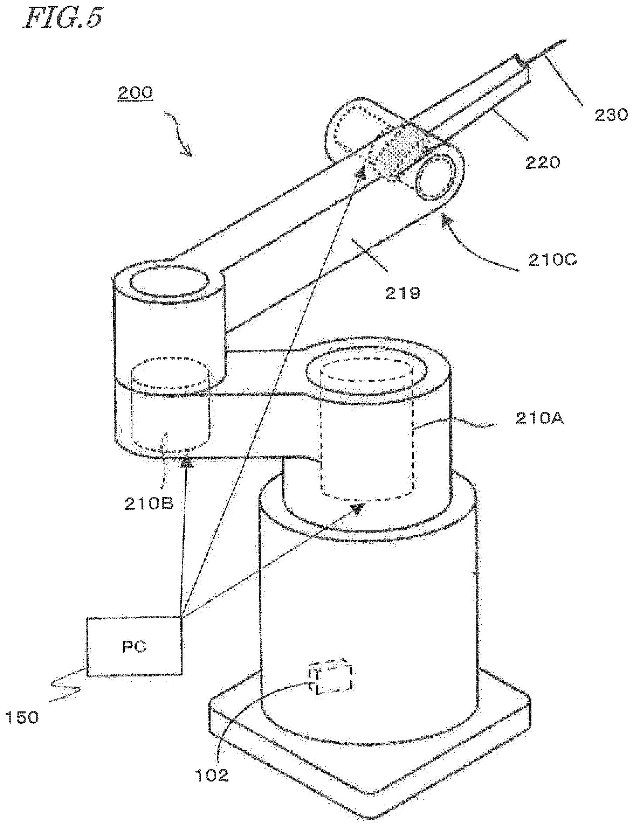

FIG. **5** shows a configuration of a welding robot 200. The welding robot **200** has a system controller **102,** a first joint drive system **210A,** a second joint drive system **210B,** a third joint drive system **210C,** and a welding torch 230. Two adjacent joint drive systems are coupled by an arm.

The third joint drive system **210C,** which is provided at an end of an arm **219,** rotates an arm **220** about the rotation shaft of a motor and thereby moves the arm **220** upward and downward, so as to adjust the position of the welding torch **230,** which is provided at the tip of the arm **220.** Note that the upward and downward movements of the arm **220** can be changed to leftward and rightward movements, depending on the arrangement of the rotation shaft of the motor.

The welding robot **200** has a plurality of joints that can be rotated by a motor. The movements of the joints are separately and independently controlled by the first to third joint drive systems **210A-210C,** respectively. The first to third joint drive systems **210A-210C** each have the same configuration as that of the motor modules **106A** and/or **106B** of FIG. **3A****,** for example, and each perform authentication on the PC **150.** In the description of a procedure for the authentication, reference is made to the description of FIG. **1** and the description of the left wheel motor module **106A** of FIG. **3A****.**

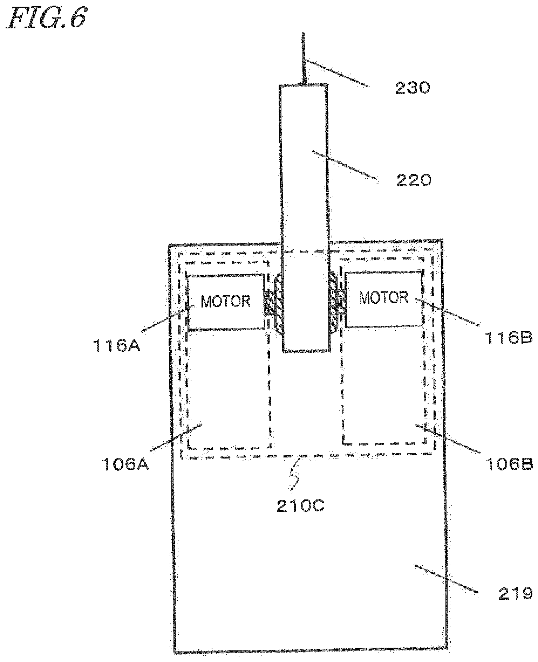

Note that the third joint drive system **210C** is provided with the two motor modules **106A** and **106B.** FIG. **6** shows a specific structure of the third joint drive system **210C.** Elements that are substantially the same as those of FIG. **5** are indicated by the same reference characters.

The motor modules **106A** and **106B** of the first joint drive system **210A,** the second joint drive system **210B,** and the third joint drive system **210C** each independently perform authentication on the PC **150.** The first to third joint drive systems **210A-210C** each operate according to a control instruction that is sent by the PC **150** to that joint drive system.

As shown in FIG. **6****,** in the motor modules **106A** and **106B** of the third joint drive system **210C,** the rotation shafts of the motors **116A** and **116B** are opposed. Therefore, in order to move the welding torch **230** in a certain direction, the PC **150** sends rotational direction instructions which cause the motors **116A** and **116B** to rotate in opposite directions. Note that in the case where the motors **116A** and **116B** have the same performance, the same speed instruction is used.

Thus, the configuration and authentication operation according to the present disclosure have been described. The authentication procedure according to the present disclosure can be introduced into any product or system in which a plurality of motor modules are controlled by an external device. Examples of such a product or system include ship propellers, pickup arms for harvesting vegetables, and belt conveyors.

In the above embodiments, it has been assumed that an external device (PC) to be authenticated, and a motor module (more specifically, a processor in the motor module), previously separately have a common conversion rule. However, the authenticating motor module may not previously have a conversion rule. For example, the external device (PC) to be authenticated may determine a conversion rule, and send the conversion rule to the motor module.

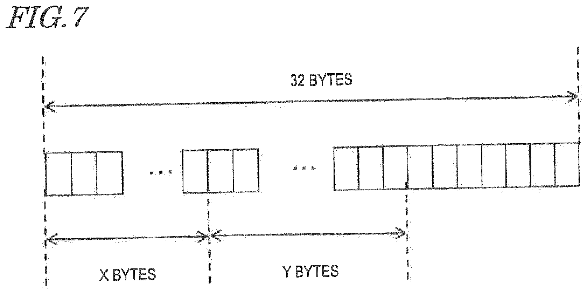

FIG. **7** is a schematic diagram of a 32-byte hash value. An example is assumed in which a conversion rule is employed according to which an external device extracts partial data having a data length of Y bytes successively from the bit at position X (counting from the most significant bit) toward the least significant bit of the 32-byte hash value. The external device generates data obtained by joining together information indicating the extraction start position (the above "X"), information indicating the data length (the above "Y"), and the extracted Y-byte data itself, as response data, and sends the resultant data to a motor module. For example, in the case of the payload length L is 13 bytes, 1 byte can be allocated to description of the information indicating the extraction start position, 1 byte can be allocated to description of the information indicating the data length, and all or a portion of the remaining 11 bytes can be allocated to the extracted Y-byte data itself. As a result, even in the case where the motor module does not previously possesses a conversion rule, the motor module can know a conversion rule that is used by the external device. Therefore, the motor module can use that conversion rule to convert a hash value calculated by itself into data having a smaller data size, and use that data for authentication.

### INDUSTRIAL APPLICABILITY

In the authentication system according to the present disclosure, an external device can be widely used to control each of motors included in one or more motor units.

### REFERENCE SIGNS LIST

- **1**: authentication system
- **100**: self-propelled robot
- **150**: PC (external device)
- **110A, 110B**: communication circuit
- **112A, 112B**: processor

## Claims

1. An authentication system which has a first and a second device and in which the first device performs authentication on the second device using a challenge-response scheme, wherein
the first device includes:
a first storage device that stores first key information for authentication;
a first communication circuit that sends and receives communication data having a payload length L; and
a first arithmetic circuit,
the second device includes:
a second storage device that stores second key information;
a second communication circuit that sends and receives communication data having the payload length L; and
a second arithmetic circuit,
the first and second storage devices further store a common function used in an authentication process,
the second arithmetic circuit of the second device sends an authentication request to the first device,
the first arithmetic circuit of the first device sends challenge data to the second device in response to the authentication request,
the second arithmetic circuit performs computation using the function taking the challenge data and the second key information as input values to generate data having a data length Ha longer than the payload length L, generates response data having a data length Hb shorter than or equal to the payload length L from the data having the data length Ha using a predetermined conversion rule, and sends the response data to the first device,
the first arithmetic circuit performs computation using the function taking the challenge data sent to the second device and the first key information as input values to generate data having the data length Ha, and generates data D1 having the data length Hb from the data having the data length Ha using the conversion rule, and
the first arithmetic circuit receives the response data from the second device, and checks the response data with the data D1 to perform authentication.

2. The authentication system according to claim 1, wherein
the first device further includes a motor having a mover,
the first communication circuit receives an instruction from an external device, and
the first arithmetic circuit controls movement of the mover according to the instruction.

3. The authentication system according to claim 2, wherein
the first key information is motor fingerprint information that varies depending on manufacturing variations of the motor and is unique to the motor.

4. The authentication system according to claim 2 or 3, wherein
the second device is a computer that sends an instruction to operate the motor.

5. The authentication system according to any of claims 1-4, wherein
the function is a private function or a hash function.

6. The authentication system according to any of claims 1-5, wherein
the function is the hash function SHA-256, and the data length Ha is 32 bytes.

7. The authentication system according to claim 6, wherein
the data length Hb is 13 bytes or less.

8. The authentication system according to claim 7, wherein
the data length Hb is 8 bytes.

9. The authentication system according to any of claims 1-8, wherein
the first and second storage devices store a common conversion rule.

10. The authentication system according to claim 9, wherein
the function is a hash function, and
the conversion rule is to extract continuous data having the data length Hb from a predetermined position of the data having the data length Ha.

11. The authentication system according to any of claims 1-8, wherein
the function is a hash function, and
the second arithmetic circuit
extracts continuous partial data having a data length Y from a predetermined position of the data having the data length Ha, and
generates information specifying the predetermined position, information indicating the data length Y, and the partial data, as the response data having the data length Hb.

12. The authentication system according to any of claims 1-11, wherein
if authentication of the second device is successful,
the second device sends an instruction to control an operation of the first device, and
the first device operates according to the instruction.

13. The authentication system according to any of claims 1-12, wherein
if authentication of the second device has successively failed at least a predetermined number of times, the first device rejects a subsequent authentication process for at least a predetermined period of time.

14. The authentication system according to any of claims 1-11, wherein
after the first device has successfully authenticated the second device,
the second arithmetic circuit of the second device sends, to the first device, challenge data for authentication of the first device,
the first arithmetic circuit performs computation using the function taking the challenge data for authentication of the first device and the first key information as input values to generate data having a data length Ha longer than the payload length L, generates response data for authentication of the first device having a data length Hb shorter than or equal to the payload length L, from the data having the data length Ha using the conversion rule, and sends the response data to the second device,
in response to reception of the response data for authentication of the first device, the second arithmetic circuit performs computation using the function taking the challenge data for authentication of the first device sent to the first device and the second key information as input values to generate data having the data length Ha, and generates data D2 having the data length Hb from the data having the data length Ha using the conversion rule, and
the second arithmetic circuit checks the response data for authentication of the first device received from the first device with the data D2 to perform authentication on the first device.

15. The authentication system according to claim 13, wherein
if authentication of the first device is successful,
the second device sends an instruction to control an operation of the first device, and
the first device operates according to the instruction.

16. An electronic device which is the first device in the authentication system according to any of claims 1-14.

17. An electronic device which is the second device in the authentication system according to any of claims 1-14.

18. An authentication method for causing a first device to perform authentication on a second device using a challenge-response scheme, wherein
the first device includes
a first storage device that stores first key information for authentication, and
a first arithmetic circuit,
the second device includes
a second storage device that stores second key information, and
a second arithmetic circuit,
the first and second devices communicate with each other using communication data having a payload length L and have a common function used in an authentication process, and
the method comprises:
(a) causing the second arithmetic circuit of the second device to send an authentication request to the first device;
(b) causing the first arithmetic circuit of the first device to send challenge data to the second device in response to the authentication request;
(c) causing the second arithmetic circuit to perform computation using the function taking the challenge data and the second key information as input values to generate data having a data length Ha longer than the payload length L, generate response data having a data length Hb shorter than or equal to the payload length L from the data having the data length Ha using a conversion rule, and send the response data to the first device;
(d) causing the first arithmetic circuit to receive the response data;
(e) causing the first arithmetic circuit to perform computation using the function taking the challenge data sent to the second device and the first key information as input values to generate data having the data length Ha, and generate data D1 having the data length Hb from the data having the data length Ha using the conversion rule; and
(f) checking the response data received in (d) with the data D1 generated in (e) to perform authentication.
